# EUROPÄISCHE PATENTSCHRIFT

(11) **EP 2 602 560 B1**
(45) Veröffentlichungstag und Bekanntmachung des Hinweises auf die Patenterteilung: **25.02.2015**
(21) Anmeldenummer: 12195469.7
(22) Anmeldetag: 04.12.2012
(51) Int. Cl.: F24D 19/10, G05D 23/00, F24F 5/00, F24D 3/00, G05D 23/19, F24F 11/00

(54) **Klimatisierungsvorrichtung mit einer Heizeinrichtung und einer Wärmepumpe, sowie ein Verfahren zu deren Betrieb**
Air-conditioning device with a heater and a heat pump, and method for its operation
Dispositif de climatisation avec un dispositif de chauffage et une pompe à chaleur, ainsi que leur procédé de fonctionnement

(30) Priorität: 07.12.2011 DE 102011120442
(43) Veröffentlichungstag der Anmeldung: 12.06.2013
(73) Patentinhaber: ROBERT BOSCH GMBH, 70442 Stuttgart (DE)
(72) Erfinder: Holtz, Gerald, 70174 Stuttgart (DE)

(56) Entgegenhaltungen:
- US-A- 4 178 988

## Beschreibung

Die Erfindung betrifft eine Klimatisierungsvorrichtung mit einer Heizeinrichtung und eine Wärmepumpe nach dem Oberbegriff des Patentanspruches 1 sowie ein Verfahren zu deren Betrieb.

Wärmepumpen werden unter anderem zum Heizen und Kühlen von Gebäuden eingesetzt. Das thermodynamische Prinzip der Wärmepumpe ist allgemein bekannt und kommt insbesondere in Kühlschränken, Klimaanlagen, Split-Klima-Geräten oder Sole-Wärmepumpen zum Einsatz.

Eine Wärmepumpe besteht dabei aus einem ersten Wärmetauscher zur Wärmeaufnahme und einem zweiten Wärmetauscher zur Wärmeabgabe. Die Wärmetauscher sind über zwei Verbindungsleitungen hydraulisch miteinander verbunden und bilden so einen Kreislauf für Kältemittel aus. In einer der Verbindungsleitungen ist ein Verdichter und in der anderen ein Expansionsventil angeordnet. Einer der Wärmetauscher liegt so in Strömungsrichtung des Kältemittels hinter dem Verdichter und einer hinter dem Expansionsventil.

Bei einer Aktivierung des Verdichters, der meist einen elektrischen Antrieb aufweist, wird das Kältemittel hinter dem Verdichter komprimiert, wodurch sich die Temperatur des verdichteten Kältemittels erhöht. Beim Durchströmen des sich anschließenden Wärmetauschers gibt das warme Kältemittel Wärme ab. Auf der Seite des anderen Wärmetauschers wird das Kältemittel hingegen bei der Aktivierung des Verdichters entspannt. Dies senkt die Temperatur des entspannten Kältemittels, sodass das Kältemittel in diesem Wärmetauscher Wärme von einer Wärmequelle aufnehmen kann.

Um den Wärmepumpenprozess zum Beheizen und zum Kühlen eines Gebäudes, einsetzen zu können, ist aus dem Stand der Technik weiterhin bekannt, die Strömungsrichtung des Kältemittels umkehrbar auszulegen. Bei derartigen reversiblen Wärmepumpen kehrt sich die Wärmeaufnahme und -abgabe der Wärmetauscher in Abhängigkeit von der Strömungsrichtung des Kältemittels um. Einer der Wärmetauscher korrespondiert dann zur Klimatisierung mit dem Gebäude und einer mit der Peripherie außerhalb des Gebäudes. In einem Heizbetrieb wird so Energie aus der Peripherie, insbesondere aus der Luft oder dem Boden, gewonnen und mittels eines KlimaWärmetauschers an die Raumluft eines Gebäudeteils abgegeben. Im Kühibetrieb wird die Raumluft durch den Klima-Wärmetauscher gekühlt und mittels des Peripherie-Wärmetauschers an die Peripherie abgegeben.

Oftmals werden Wärmepumpen jedoch nur zum Kühlen im Sommer eingesetzt und die Raumbeheizung im Winter, erfolgt mittels Radiatoren/Heizkörpern oder Fußbodenheizung in Kombination mit einem fossilen Heizgeräte.

Außerdem sind Kombinationen von Wärmepumpen und fossilen Heizeinrichtungen bekannt, bei welchen die Kopplung hydraulisch erfolgt. Hierbei ist in den Wasserkreislauf eines Kessels ein Kältemittel-Wasser-Wärmeübertrager integriert, welcher mittels Kältemittelleitung mit der Wärmepumpe verbunden ist. Bei Außentemperaturen von zum Beispiel größer 0°C wird dann mit der Wärmepumpe geheizt, da diese Wärme effizienter bereitstellen kann. Ist die Außentemperaturen hingegen bspw. kleiner 0°C ist die Effizienz der Wärmepumpe eventuell schlechter als die des Kessels, so dass die Wärmebereitstellung durch den Kessel übernommen wird. Hierdurch kann die Effizienz bezüglich der Heizkosten oder zum Beispiel auch der CO2-Emissionen optimiert werden.

Nachteilig ist an einer solchen Ausführung ist, dass in der Regel ein relativ hoher Installationsaufwand besteht. Dieser betrifft die Verlegung von elektrischen und hydraulischen Leitung und die Anschaffung eines speziellen Wärmespeichers mit Wärmetauscher für die Wärmepumpe. Derartige Bauarbeiten können einerseits vom Aufwand her umfangreich sein und andererseits auch zu erheblichen Kosten führen.

Aufgabe der Erfindung ist es daher, die Mängel des Standes der Technik zu beseitigen und eine Klimatisierungsvorrichtung mit einer Wärmepumpe zu schaffen, die auf einfache Weise mit einer möglichst beliebigen weiteren Heizeinrichtung kombiniert ist, so dass geringe Heizkosten erzielbar sind, sowie die Installation mit wenig Aufwand, einfach und kostengünstig durchführbar ist. Zudem soll der Betrieb der Klimatisierungsvorrichtung möglichst ökologisch, zu jedem Zeitpunkt gesichert, einfach und sicher sein.

Erfindungsgemäß wird dies mit den Merkmalen der Patentansprüche 1, 8 und 12 gelöst. Vorteilhafte Weiterbildungen sind den Unteransprüchen zu entnehmen.

Bei einer Klimatisierungsvorrichtung für einen Gebäudeteil, mit einem Heizkreislauf für ein Wärmeträgermedium, umfassend eine Heizeinrichtung und einen ersten Wärmetauscher, und mit einer Wärmepumpe, umfassend eine Regeleinheit, einen Peripherie-Wärmetauscher und einen Klima-Wärmetauscher, wobei der erste Wärmetauscher und der Klima-Wärmetauscher mit dem Gebäudeteil thermisch gekoppelt sind, und wobei der Peripherie-Wärmetauscher mit einer Peripherie des Gebäudeteils thermisch gekoppelt ist, sieht die Erfindung vor, dass die Regeleinheit der Wärmepumpe über eine Kommunikationsverbindung mit wenigstens einem regelbaren Ventil im Heizkreislauf verbunden ist.

Dies ermöglicht eine Steuerung der Klimatisierungsvorrichtung, bei welcher in Abhängigkeit einer Peripherietemperatur eine Aktivierung der Wärmepumpe zur Beheizung des Gebäudeteils und ein Schließen des regelbaren Ventils im Heizkreislauf erfolgen, wenn die Peripherietemperatur größer ist als eine Umschalttemperatur, sowie ein Deaktivieren der Wärmepumpe und Freigabe des regelbaren Ventils im Heizkreislauf erfolgen, wenn die Peripherietemperatur geringer ist als die Umschalttemperatur. Somit kann die Beheizung immer dann durch die Wärmepumpe übernommen werden, wenn diese effizienter arbeitet als die Heizeinrichtung. Letztere ist dabei üblicherweise eine fossile Heizeinrichtung, da diese stets einsatzbereit sein sollte.

Da nur eine Kommunikationsverbindung zwischen der Wärmepumpe und dem Heizkreislauf zu schaffen ist, nicht jedoch eine hydraulische, ist der Installationsaufwand äußerst gering. Die Erfindung erlaubt es somit Nutzern von Wärmepumpen, die eigentlich nur zum Kühlen angeschafft wurden, diese mit geringem Installations- und Kostenaufwand zum Heizen mit einer weiteren, insbesondere fossil betriebenen, Heizeinrichtung zu koppeln und dadurch Heizkosten zu sparen und/oder die CO2-Emissionen zu senken.

Zur Optimierung der Heizkosten oder der CO2-Emissionen sollten in der Regeleinheit Effizienzwerte des Heizkreislaufs und Effizienzwerte der Wärmepumpe hinterlegbar sein. Basierend auf diesen kann dann die bestmögliche Umschalttemperatur bestimmt werden. Für deren Abgleich sollte die Regeleinheit weiterhin mit einem Temperatursensor zur Bestimmung einer Peripherietemperatur der Peripherie verbunden sein. Dieser kann mit einem Temperatursensor der Wärmepumpe übereinstimmen, welcher oftmals schon allein für die Regelung der Wärmepumpe vorgesehen ist.

Eine Weiterbildung der Erfindung sieht vor, dass der erste Wärmetauscher ein Heizkörper oder eine Fußbodenheizung ist. Heizkörper und Fußbodenheizungen sind die am häufigsten eingesetzten Wärmetauscher für eine Kombination mit fossilen Heizeinrichtungen in Gebäuden. Gerade eine erfindungsgemäße Verbindung eines solchen Heizkreislaufs mit einer Wärmepumpe über eine Kommunikationsvorbindung erlaubt es somit einem sehr weiten Anwenderkreis, die Heizkosten auf einfache Art zu senken. Die Kombination mit weiteren Wärmetauschertypen ist jedoch nicht ausgeschlossen, so zum Beispiel mit einem in einer Wand integrierten Wärmetauscher.

In einer besonderen Weiterbildung der Erfindung ist vorgesehen, dass das regelbare Ventil ein elektronisches Thermostat ist. Ein elektronisches Thermostatventil kann den Schließ- und den Freigabe-Befehl der Regeleinheit der Wärmepumpe einfach umsetzen, indem ein Aktuator das Ventil umschaltet. Heizeinrichtungen weisen typischer Weise entweder jeweils ein Thermostat pro Wärmetauscher auf, oder aber es ist ein Thermostat im zu beheizenden Gebäudeteil vorgesehen. Diese ohnehin notwendigen Thermostate können um die erfindungsgemäß notwendigen Anforderungen ergänzt werden.

Bereits ohne die Kommunikationsverbindung als elektrisches Thermostat ausgebildete Thermostate werden entweder direkt bedient oder weisen eine Fernbedienung auf. Typische Funktionen solcher Thermostate sind unterschiedliche Wärmephasen an einem Tag und/oder unterschiedliche Wärmephasen an unterschiedlichen Tagen, zum Beispiel abhängig von Werktagen und freien Tagen. Elektronische Thermostate werden meist innerhalb des zu beheizenden Gebäudeteils eingesetzt und erfreuen sich zunehmender Beliebtheit. Durch eine Erweiterung von deren Funktion um die Kommunikationsverbindung mit der Regeleinheit der Wärmepumpe, ist eine sehr einfache Installation möglich. Solche Thermostate oder deren Fernbedienung können ggf. allein durch entsprechende Programmierung der Regeleinheit der Wärmepumpe angesteuert werden. Unter Umständen ist ein Softwareupdate des elektronischen Thermostates oder dessen Fernbedienung notwendig.

Weiterhin besteht auch die Möglichkeit, mechanische Thermostate mit einer elektrisch angesteuerten Verschließeinheit zu kombinieren. Hierdurch erfolgt die Regelung der Temperatur durch das Thermostat nach wie vor mechanisch, zusätzlich ist jedoch ein elektrisches Schließen und Freigeben des Thermostat Ventils vorgesehen.

Außerdem bietet sich ein Vertrieb von speziellen Thermostaten im Zusammenhang mit der Wärmepumpe an, um alle neuen Kunden unmittelbar auf die Koppelmöglichkeiten mit ihrem herkömmlichen Heizkreislauf aufzuklären. Die Installation eines um die erfindungsgemäßen Merkmale ergänzten Thermostats unterscheidet sich nicht von der eines herkömmlichen Thermostats. Bei Fußbodenheizungen kann beispielsweise ein an der Wand im Gebäudeteil montiertes Thermostat ersetzt werden, oder aber ein am Heizkörper montiertes Thermostat ist durch Drehen einer einzigen Überwurfmutter austauschbar. Ein Öffnen des Heizkreislaufs mit einhergehendem Austritt von Wärmeträgermedium ist jeweils nicht erforderlich.

Besonders bevorzugt ist das Ventil dem ersten Wärmetauscher zugeordnet. Durch diese Zuordnung hat die Stellung des Ventils eine im Wesentlichen auf diesen ersten Wärmetauscher ausgerichtete Auswirkung. Es handelt sich somit um ein Ventil, welches nur den Durchfluss von Wärmeträgermedium im ersten Wärmetauscher regelt. Damit ist sichergestellt, dass die Regeleinheit der Wärmepumpe keine Wärmetauscher außerhalb des Wirkungsbereichs des Klimawärmetauschers - nämlich dem Gebäudeteil - regelt. Außerdem ist die Kommunikationsverbindung möglichst kurz ausgestaltbar. Diese muss nicht über den Gebäudeteil hinausgehen.

Gemäß einer speziellen Weiterbildung der Erfindung ist das Ventil am ersten Wärmetauscher angeordnet. Der erste Wärmetauscher bietet meist gute Montagepositionen für das Ventil. Dies gilt insbesondere für unmittelbar an einem Heizkörper befestigte Thermostate, welche besonders leicht ersetzt werden können.

Die Kommunikationsverbindung könnte eine Kabelverbindung sein. Dies bietet sich bei Neubauten oder Sanierungen an, insbesondere wenn vom Anlagenbetreiber auf geringe elektromagnetische Felder Wert gelegt wird.

Vorzugsweise sieht die Erfindung jedoch vor, dass die Kommunikationsverbindung eine Funkverbindung ist. Eine Funkverbindung erfordert keinerlei Verbindung über ein Kabel zwischen dem Ventil im Heizkreislauf und der Regeleinheit der Wärmepumpe. Die Installation ist so besonders leicht und komfortabel durchführbar.

Die erfindungsgemäß notwendigen zusätzlichen Funktionen für als Thermostat ausgebildete Ventile sind in der Herstellung gegenüber herkömmlichen über Funk angesteuerten elektrischen Thermostaten nicht teurer, da die Funkverbindung zur Regeleinheit keine zusätzlichen Bauteile erfordern. Dies gilt sowohl für direkte Funkverbindungen als auch für indirekte Funkverbindungen über eine Fernbedienung des elektrischen Thermostats. Beispielsweise wäre es möglich, die im Thermostat eingestellte und geforderte Raumtemperatur mittels der Regeleinheit temporär herabzusetzen, wenn mit der Wärmepumpe geheizt werden soll, bspw. auf 10 °C bei tatsächlich geforderten 23 °C. Damit würde dem Thermostat vermittelt, dass kein Heizbedarf besteht, und es würde schließen. Somit wird eine kostengünstige Vorrichtung zur Verfügung gestellt, welche geeignet ist, die Heizkosten zu senken.

In einer bevorzugten Anordnung ist das regelbare Ventil in dem Gebäudeteil angeordnet. Damit ist die Kommunikationsverbindung möglichst kurz und einfach ausbildbar. Bei einer Kommunikationsverbindung mit Kabeln sind diese nur über kurze Distanzen zu verlegen. Funkverbindungen erfordern keine starken Sender und Empfänger. Das Funksignal wird außerdem kaum vom Wand- und Deckenaufbau des Gebäudes behindert, beispielsweise von einer Armierung.

Um die Wärmepumpe nicht nur zum Heizen des Gebäudeteils einsetzen zu können, sollte die Wärmepumpe reversibel sein. Damit lässt sich die Förderrichtung des Kältemittels im Wärmepumpenkreislauf umkehren. Folglich kehrt sich auch die Wärmeabgabe und - aufnahme am Peripherie- und Klimawärmetauscher um. Der Klimawärmetauscher weist dann im Kühlbetrieb eine tiefere Temperatur als die Raumtemperatur im Gebäudeteil auf. Er überträgt dann Wärme aus dem Gebäudeteil auf das Kältemittel und führt diese über den Peripherie-Wärmetauscher an die Peripherie ab.

Die Erfindung eignet sich auch in besonderem Maße für Wärmepumpen, welche als Split-Klima-Gerät ausgebildet sind. Diese sind in eine Inneneinheit und eine Außeneinheit aufgeteilt. Die Inneneinheit mit dem Klimawärmtauscher ist in dem Gebäudeteil und die Außeneinheit mit dem Peripherie-Wärmetauscher in der Peripherie angeordnet. Nachgerüstete, einfache Geräte sind unmittelbar gegenüberliegend an einer Gebäudewand installiert. Ein Loch in der Gebäudewand zur Durchführung der Kältemittelleitungen und ein elektrischer Anschluss sind hierfür ausreichend.

Die Wärmepumpe sollte einen Kältemittelkreislauf aufweisen, in dem der Peripherie-Wärmetauscher und der Klima-Wärmetauscher angeordnet sind, wobei in einer ersten Leitung zwischen dem Peripherie-Wärmetauscher und dem Klima-Wärmetauscher ein Verdichter und in einer zweiten Leitung zwischen dem Peripherie-Wärmetauscher und dem Klima-Wärmetauscher ein Expansionsventil angeordnet ist.

Eine Ausgestaltungsmöglichkeit betrifft den Verdichter, der ein Mehrwegeventil sowie eine Umkehrschleife umfassen kann. Damit ist die Strömungsrichtung des Kältemittels im Kältemittelkreislauf umkehrbar, ohne dass die Förderrichtung des eigentlichen Verdichters umgekehrt wird. Zusätzlich könnte das Expansionsventil aus zwei parallel angeordneten monodirektionalen Expansionsventilen ausgebildet sein, welche entgegengerichtet ausgerichtet sind. An einem der Expansionsventile kann das Kältemittel im Betrieb der Wärmepumpe expandieren, wohingegen das andere geschlossen ist.

Ferner betrifft die Erfindung ein Verfahren zur Steuerung einer Klimatisierungsvorrichtung für einen Gebäudeteil, mit einem Heizkreislauf für ein Wärmeträgermedium umfassend eine Heizeinrichtung und einen ersten Wärmetauscher, und mit einer Wärmepumpe umfassend eine Regeleinheit, einen Peripherie-Wärmetauscher und einen Klima-Wärmetauscher, wobei der erste Wärmetauscher und der Klima-Wärmetauscher mit dem Gebäudeteil thermisch gekoppelt sind, wobei der Peripherie-Wärmetauscher mit einer Peripherie des Gebäudeteils thermisch gekoppelt ist, wobei die Regeleinheit der Wärmepumpe über eine Kommunikationsverbindung mit wenigstens einem regelbaren Ventil im Heizkreislauf verbunden ist, und wobei die Regeleinheit der Wärmepumpe folgende Schritte durchführt:
A) Bestimmen einer Peripherietemperatur der Peripherie;
B) Vergleichen der Peripherietemperatur mit einer Umschalttemperatur;
C) Aktivieren der Wärmepumpe zur Beheizung des Gebäudeteils und Schließen des regelbaren Ventils im Heizkreislauf, wenn die Peripherietemperatur größer ist als die Umschalttemperatur;
D) Deaktivieren der Wärmepumpe und Freigabe des regelbaren Ventils im Heizkreislauf, wenn die Peripherietemperatur geringer ist als die Umschalttemperatur.

Da nur eine Kommunikationsverbindung zwischen der Wärmepumpe und dem Heizkreislauf zu schaffen ist, nicht jedoch eine hydraulische, ist der Installationsaufwand äußerst gering. Die Erfindung erlaubt es somit Nutzern von Wärmepumpen, die eigentlich nur zum Kühlen angeschafft wurden, diese mit geringem Installations- und Kostenaufwand zum Heizen mit einer weiteren, insbesondere fossil betriebenen, Heizeinrichtung zu koppeln und dadurch Heizkosten zu sparen und/oder die CO2-Emissionen zu senken.

Dabei sollte die Regeleinheit mit einem Temperatursensor zur Bestimmung der Peripherietemperatur der Peripherie verbunden sein. Dieser kann mit einem Temperatursensor der Wärmepumpe übereinstimmen, welcher oftmals schon allein für die Regelung der Wärmepumpe vorgesehen ist.

Eine Weiterbildung des erfindungsgemäßen Verfahrens sieht vor, dass in der Regeleinheit Effizienzwerte des Heizkreislaufs und Effizienzwerte der Wärmepumpe hinterlegt sind und die Regeleinheit eine Berechnung der Umschalttemperatur anhand des Effizienzwerts des Heizkreislaufs und des Effizienzwerts der Wärmepumpe durchführt. Somit obliegt die Umschalttemperatur nicht einer Vorgabe des Installateurs, sondern wird stets in optimaler Weise berechnet.

Gemäß einer näheren Ausgestaltung sind die Effizienzwerte CO2-Effizienzwerte und die Umschalttemperatur ergibt sich aus dem Schnittpunkt der CO2-Emissionen der Wärmepumpe sowie der CO2-Emissionen der Heizeinrichtung über der Peripherietemperatur. Dieser Schnittpunkt ergibt sich dadurch, dass die CO2-Emissionen pro erzeugter Wärmemenge für das Heizen mit der Wärmepumpe mit sinkender Peripherietemperatur stark ansteigen. Dahingegen sind beispielsweise die CO2-Emissionen einer fossilen Heizeinrichtung pro erzeugter Wärmemenge relativ konstant. Der Schnittpunkt gibt somit die Umschalttemperatur an, unterhalb derer ein Heizen mit der Wärmepumpe aus CO2-Emissionsgründen nicht mehr sinnvoll ist. Die Klimatisierungsvorrichtung kann so mit minimalen CO2-Emissionen betrieben werden. Die Daten zur Berechnung der Effizienzwerte sollten hierfür in die Regeleinheit eingebbar sein. Auf diese Weise ist die Umschalttemperatur für jede Kombination aus Heizeinrichtung und Wärmepumpe optimal berechenbar.

In einer anderen Ausgestaltung sind die Effizienzwerte Kosten-Effizienzwerte und die Umschalttemperatur ergibt sich aus dem Schnittpunkt der Betriebskosten der Wärmepumpe sowie der Betriebskosten der Heizeinrichtung über der Peripherietemperatur. Dieser Schnittpunkt ergibt sich dadurch, dass die Kosten pro erzeugter Wärmemenge für das Heizen mit der Wärmepumpe mit sinkender Peripherietemperatur stark ansteigen. Dahingegen sind beispielsweise die Kosten einer fossilen Heizeinrichtung pro erzeugter Wärmemenge relativ konstant. Der Schnittpunkt gibt somit die Umschalttemperatur an, unterhalb derer ein Heizen mit der Wärmepumpe aus Kostengründen nicht mehr sinnvoll ist. So können beispielsweise auch aktuelle Kosten für Strom und Brennstoff berücksichtigt werden, sodass die Umschalttemperatur entsprechend korrigiert wird. Insbesondere bei einer elektrisch betriebenen Wärmepumpe und einer fossil betriebenen Heizeinrichtung würde die Umschalttemperatur bei steigenden Stromkosten steigen und bei sinkenden Stromkosten sinken. Steigen dahingegen die Kosten für den fossilen Brennstoff überproportional, sinkt die Umschalttemperatur. Vice versa steigt die Umschalttemperatur bei sinkenden Brennstoffkosten. Die Betriebskosten der Klimatisierungsvorrichtung sind so besonders gering. Die Daten zur Berechnung der Effizienzwerte sollten hierfür in die Regeleinheit eingebbar sein. Auf diese Weise ist die Umschalttemperatur für jede Kombination aus Heizeinrichtung und Wärmepumpe optimal berechenbar.

Vorzugsweise wird die Regeleinheit so ausgestaltet, dass zwischen CO2-Effizienzwerten und Kosten-Effizienzwerten ausgewählt werden kann. Somit eignet sich die erfindungsgemäße Klimatisierungsvorrichtung sowohl für Betreiber mit Kostenfokus als auch für Betreiber mit ökologischem Fokus. Die Regeleinheit könnte zusätzlich auch eine Mischkalkulation der Umschalttemperatur basierend auf CO2-Effizienzwerten und Kosten-Effizienzwerten durchführen, indem der Nutzer Präferenzen für die beiden Ziele eingibt.

Um bei Peripheriebedingungen in unmittelbarer Umgebung der Umschalttemperatur nicht ständig zwischen einem Heizen mit der Wärmepumpe und der Heizeinrichtung zu wechseln, kann eine Mindestbetriebszeit nach einem Schaltvorgang des regelbaren Ventils vorgesehen sein. Während dieser würde ein erneutes Umschalten des Ventils blockiert.

Alternativ bietet es sich an, einen Pufferwert vorzusehen, um welchen die Umschalttemperatur durchschritten werden muss, bevor ein Umschalten des regelbaren Ventils erfolgt, insbesondere gemäß der Schritte C) und D). Dieser Pufferwert könnte beispielsweise zwischen 0,5 °C und 2 °C liegen.

Das erfindungsgemäße Verfahren kann dadurch ergänzt werden, dass ein Regeln einer Raumtemperatur auf einen Soll-Wert bei aktivierter Wärmepumpe mit der selbigen erfolgt. Somit wird der Wärmeanforderung des Gebäudeteils bestmöglich Rechnung getragen. Außerdem wird nicht unnötig viel geheizt, wodurch die Heizkosten gering sind.

Weiterhin erfolgt bevorzugt in äquivalenter Weise ein Regeln der Raumtemperatur auf einen Soll-Wert bei deaktivierter Wärmepumpe mit dem Heizkreislauf. Diese Regelung erfolgt meist mittels eines Thermostats. Ergänzend ist oftmals eine Nachtabschaltung vorgesehen, welche das Heizen bei Nacht unterbindet. Eine Nachtabschaltung kann ebenso für die Wärmepumpe vorgesehen sein. Dies senkt die Heizkosten, da bei Nacht ein geringerer Wärmebedarf für den Gebäudeteil vorliegen kann.

Um eine zentrale Einstellung der Gebäudetemperatur vornehmen zu können, sollte die Regeleinheit der Wärmepumpe den Soll-Wert an das regelbare Ventil übermitteln. Dies stellt sicher, dass die Wärmepumpe und der Heizkreislauf aufeinander abgestimmt sind und nicht auf unterschiedliche Temperaturen regeln. Außerdem kann ein Bediener alle Eingaben komfortabel an einem Ort vorgeben.

Ferner betrifft die Erfindung eine Verwendung einer Klimatisierungsvorrichtung zur Klimatisierung eines Gebäudeteils, mit einem Heizkreislauf für ein Wärmeträgermedium umfassend eine Heizeinrichtung und einen ersten Wärmetauscher, und mit einer Wärmepumpe umfassend eine Regeleinheit, einen Peripherie-Wärmetauscher und einen Klima-Wärmetauscher, wobei der erste Wärmetauscher und der Klima-Wärmetauscher mit dem Gebäudeteil thermisch gekoppelt sind, wobei der Peripherie-Wärmetauscher mit einer Peripherie des Gebäudeteils thermisch gekoppelt ist, und wobei die Regeleinheit der Wärmepumpe über eine Kommunikationsverbindung mit wenigstens einem regelbaren Ventil im Heizkreislauf verbunden ist.

Die Zeichnungen stellen Ausführungsbeispiele der Erfindung dar. Es zeigt:
Fig. 1: eine schematisch dargestellte installierte Klimatisierungsvorrichtung und
Fig. 2 ein Regeldiagramm einer Regeleinheit einer Wärmepumpe über der Zeit.

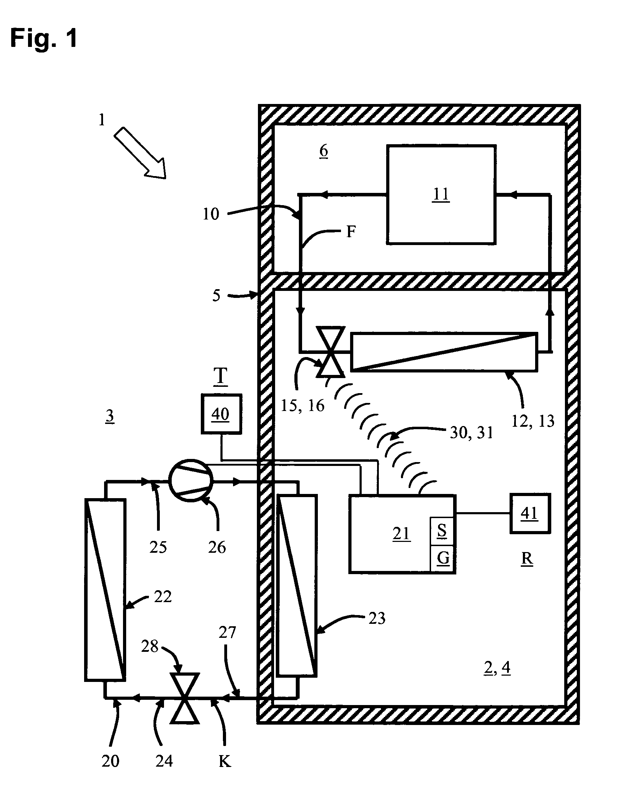

Fig. 1 zeigt eine schematisch dargestellte installierte Klimatisierungsvorrichtung 1 für einen Gebäudeteil 2 in einem Gebäude 5. Diese weist einen Heizkreislauf 10 für ein Wärmeträgermedium F umfassend eine Heizeinrichtung 11 und einen ersten Wärmetauscher 12 auf. Der erste Wärmetauscher 12 ist mit dem Gebäudeteil 2 thermisch gekoppelt. Dieser Gebäudeteil 2 ist ein Raum 4, insbesondere ein klimatisch gekoppelter Raum 4, bspw. ein Wohnzimmer, Schlafzimmer oder Büro, sowie der erste Wärmetauscher 12 ein in diesem Gebäudeteil 2 angeordneter Heizkörper 13. Die Heizeinrichtung 11 ist wiederum in einem anderen Raum 6 angeordnet, bspw. einem Heizraum.

Weiterhin ist in dem Heizkreislauf 10 ein regelbares Ventil 15 angeordnet. Letzteres ist als elektronisches Thermostat 16 ausgebildet. Man erkennt, dass das regelbare Ventil 15 dem ersten Wärmetauscher 12 zugeordnet ist. Es sitzt in Strömungsrichtung des Wärmeträgermediums F unmittelbar vor letzterem, und liegt insbesondere auch in dem Gebäudeteil 2.

Außerdem ist eine Wärmepumpe 20 umfassend eine Regeleinheit 21, einen Peripherie-Wärmetauscher 22 und einen Klima-Wärmetauscher 23 vorgesehen. Diese Wärmepumpe 20 weist einen Kältemittelkreislauf 24 auf, in dem der Peripherie-Wärmetauscher 22 und der Klima-Wärmetauscher 23 angeordnet sind. In einer ersten Leitung 25 zwischen dem Peripherie-Wärmetauscher 22 und dem Klima-Wärmetauscher 23 befindet sich ein Verdichter 26. Außerdem befindet sich in einer zweiten Leitung 27 zwischen dem Peripherie-Wärmetauscher 22 und dem Klima-Wärmetauscher 23 ein Expansionsventil 28. Bei einer solchen Wärmepumpe 20 könnte es sich um ein Split-Klima-Gerät handeln. Damit die Wärmepumpe 20 zum Heizen und Kühlen eingesetzt werden kann, ist sie reversibel ausgebildet. Insbesondere ist die Förderrichtung des Verdichters 26 umkehrbar. Zusätzlich ist auch das Expansionsventil 28 bidirektional durchströmbar. Eine Auslegung der Leitungen 24, 25 sowie der Wärmetauscher 22, 23 der Wärmepumpe 20 an die unterschiedlichen Drücke ist dabei berücksichtigt. In der dargestellten Strömungsrichtung des Kältemittels K liegt der Klima-Wärmetauscher 23 hinter dem Verdichter 26. Damit befindet sich die Wärmepumpe 20 in einem Heizbetrieb.

Der Klima-Wärmetauscher 23 der Wärmepumpe 20 ist ebenso wie der erste Wärmetauscher 12 der Heizeinrichtung 10 mit dem Gebäudeteil 2 thermisch gekoppelt. Beide dienen damit der Klimatisierung desselben Gebäudeteils 2. Dahingegen ist der Peripherie-Wärmetauscher 22 mit einer Peripherie 3 des Gebäudeteils 2 thermisch gekoppelt.

Weiterhin weist die Regeleinheit 21 der Wärmepumpe 20 eine Verbindung zu einem Temperatursensor 40 in der Peripherie 3 auf. Dargestellt ist hierbei eine Kabelverbindung. Eine Funkverbindung wäre jedoch ebenso einsetzbar. Ein weiterer mit der Regeleinheit 21 verbundener Temperatursensor 41 findet sich im Gebäudeteil 2. Auch hier ist eine Kabelverbindung gezeigt, die jedoch ebenfalls als Funkverbindung realisierbar ist.

Schließlich ist die Regeleinheit 21 der Wärmepumpe 20 über eine Kommunikationsverbindung 30 mit dem regelbaren Ventil 15 im Heizkreislauf 10 verbunden. Diese Kommunikationsverbindung 30 ist eine Funkverbindung 31.

Zur Regelung der Klimatisierungsvorrichtung 1 sind in der Regeleinheit ein Soll-Wert S der Raumtemperatur R innerhalb des Gebäudebereichs 2 sowie eine Umschalttemperatur G hinterlegt.

Mittels dieser Klimatisierungsvorrichtung 1 ist nunmehr ein Verfahren durchführbar, bei welchem die Regeleinheit 21 der Wärmepumpe 20 folgende Schritte durchführt:
A) Bestimmen einer Peripherietemperatur T der Peripherie 3, insbesondere mittels des Temperatursensors 40 in der Peripherie 3;
B) Vergleichen der Peripherietemperatur T mit einer Umschalttemperatur G;
C) Aktivieren ON der Wärmepumpe 20 zur Beheizung des Gebäudeteils 2 und Schließen S1 des regelbaren Ventils 15 im Heizkreislauf 10, wenn die Peripherietemperatur T größer ist als die Umschalttemperatur G, wobei das Schließen des regelbaren Ventils 15 insbesondere durch Ausgabe eines Funksignals erfolgt;
D) Deaktivieren OFF der Wärmepumpe 20 und Freigabe S2 des regelbaren Ventils 15 im Heizkreislauf 10, wenn die Peripherietemperatur T geringer ist als die Umschalttemperatur G, wobei die Freigabe des regelbaren Ventils 15 insbesondere durch Ausgabe eines Funksignals erfolgt.

Das Verfahren ist zusätzlich dadurch optimiert, dass die Umschalttemperatur um einen definierten Pufferwert durchschritten werden muss, bevor eine Umschaltung gemäß der Schritte C) und D) erfolgt. Die Regeleinheit 21 schaltet hierdurch bei einer Peripherietemperatur T, welche um die Umschalttemperatur G schwankt, nicht in kurzen Zeitabständen zwischen den Schritten C) und D) hin und her. Effizienzverluste beim Anlauf der Wärmepumpe 20 und des Heizkreislaufs 10 werden so vermieden.

Weiterhin sind in der Regeleinheit 21 Effizienzwerte des Heizkreislaufs 10 und Effizienzwerte der Wärmepumpe 20 hinterlegbar, bzw. hinterlegt und die Regeleinheit 21 führt eine Berechnung der Umschalttemperatur G anhand des Effizienzwerts des Heizkreislaufs 10 und des Effizienzwerts der Wärmepumpe 20 durch.

Insbesondere kann an der Regeleinheit 21 zwischen CO2-Effizienzwerten und Kosten-Effizienzwerten ausgewählt werden. Die jeweils notwendigen Daten zur Berechnung der Effizienzwerte sind in die Regeleinheit 21 eingebbar. Hierzu gehören die Betriebskosten pro Wärmeeinheit der Heizeinrichtung 11, insbesondere deren Effizienz und die Kosten für einen fossilen Brennstoff, sowie die Betriebskosten der Wärmepumpe, insbesondere deren Effizienz und der aktuellen Stromkosten.

Die CO2-Emissionen-optimierte Umschalttemperatur G ergibt sich aus dem Schnittpunkt der CO2-Emissionen der Wärmepumpe 20 sowie der CO2-Emissionen der Heizeinrichtung 11 über der Peripherietemperatur T.

Außerdem ergibt sich die kostenoptimierte Umschalttemperatur G aus dem Schnittpunkt der Betriebskosten der Wärmepumpe 20 sowie der Betriebskosten der Heizeinrichtung 11 über der Peripherietemperatur T.

Das Verfahren umfasst auch noch ein Regeln der Raumtemperatur R auf den Soll-Wert S bei aktivierter Wärmepumpe 20 mit der selbigen, sowie ein Regeln der Raumtemperatur R auf den Soll-Wert S bei deaktivierter Wärmepumpe 20 mit dem Heizkreislauf 10. Die Regeleinheit 21 übermittelt diesen Soll-Wert S an das regelbare Ventil 15, insbesondere über die Kommunikationsverbindung 30.

Schließlich sieht das Verfahren noch vor, die Wärmepumpe 20 im reversiblen Modus, d.h. in einem Kühlbetrieb, zu aktivieren, wenn die Raumtemperatur R eine obere Grenztemperatur überschreitet. Folglich wird die Raumtemperatur R des Gebäudeteils 2 mittels der Wärmepumpe 20 gekühlt. Dies kann ebenso eine Regelung auf den Soll-Wert S umfassen. Bevorzugt wird jedoch ein zweiter, insbesondere etwas höherer, Soll-Wert in der Regeleinheit hinterlegt, auf den im Kühlbetrieb geregelt wird. Dies senkt die Betriebskosten der Klimatisierungsvorrichtung 1 und außerdem wird nicht zwischen einem Heizbetrieb und einem Kühlbetrieb hin und her geschaltet.

Eine nicht dargestellte aber mögliche Erweiterung des Heizkreislaufs 10 betrifft weitere in Reihe und parallel angeordnete Wärmetauscher im Gebäudeteil 2. Dies ist zum Beispiel bei mehreren Heizkörpern in einem Raum der Fall. Wenigstens jedem der parallel angeordneten Wärmetauscher sollte dann ein regelbares Ventil zugeordnet sein, sodass der Durchfluss von Wärmeträgermedium durch den jeweiligen Wärmetauscher regelbar ist. Jedes dieser Ventile sollte auch über eine Kommunikationsverbindung mit der Regeleinheit 21 der Wärmepumpe 20 verbunden sein. Auf diese Weise kann die Regeleinheit 21 alle Wärmetauscher in dem Gebäudeteil 2 ansteuern. Außerdem kann die Heizeinrichtung 11 Bestandteil weiterer Heizkreisläufe sein, die der Beheizung weiterer Gebäudeteile dienen. In diesen weiteren Gebäudeteilen könnten wiederum eine Regeleinheit und ein Klima-Wärmetauscher äquivalent zum ersten Gebäudeteil 2 vorhanden sein. Die Klima-Wärmetauscher sind dann entweder jeweils Bestandteil einer separaten Wärmepumpe oder aber parallel oder in Reihe zum ersten Wärmetauscher der gezeigten Wärmepumpe geschaltet.

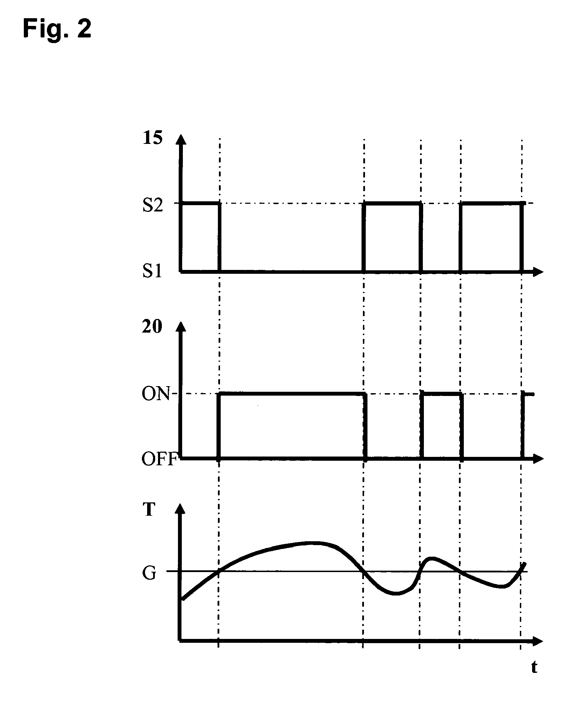

In Fig. 2 findet sich ein Regeldiagramm der Regeleinheit 21 über der Zeit t. Die Zeit t ist dabei auf der Abszisse dargestellt. Auf einer ersten Ordinate ist der Verlauf der Peripherietemperatur T gezeigt. Diese durchschreitet an fünf Zeitpunkten eine als horizontale Gerade dargestellte Umschalttemperatur G. Jeder dieser Zeitpunkte löst Schaltereignisse aus, die von der Regeleinheit 21 ausgegeben werden. Zum einen betrifft dies die Aktivierung ON und Deaktivierung OFF der Wärmepumpe 20, dargestellt auf einer weiteren Ordinate. Zum anderen erfolgt ein Umschalten eines Ventils 15 in einem Heizkreislauf 10, von einer Geschlossenstellung S1 in eine Freigegebenstellung S2 und umgekehrt, dargestellt auf einer dritten Ordinate.

Vor der ersten Durchschreitung der Umschalttemperatur G liegt die Peripherietemperatur T unterhalb von dieser. Hier ist es so kalt, dass ein Heizen mit dem Heizkreislauf 10 effizienter ist als mit der Wärmepumpe 20. Entsprechend befindet sich das Ventil 15 im Heizkreislauf 10 in einer Freigegebenstellung S2 und die Wärmepumpe 20 ist deaktiviert OFF.

Wie man erkennt, steigt die Peripherietemperatur T an und durchschreitet die Umschalttemperatur G schließlich. Ab diesem Zeitpunkt ist das Heizen mit der Wärmepumpe 20 effizienter als mit dem Heizkreislauf 10. Es wird daher ein Signal von der Regeleinheit 21 ausgegeben, welches eine Geschlossenstellung S2 des regelbaren Ventils 15 veranlasst. Gleichzeitig wird die Wärmepumpe 20 aktiviert ON.

Nach längerer Zeit fällt die Peripherietemperatur T schließlich wieder bis sie die Umschalttemperatur G durchschreitet. Hier wird das regelbare Ventil 15 erneut in eine Freigegebenstellung S2 gebracht sowie die Wärmepumpe 20 deaktiviert.

Nicht erkennbar ist hierbei die Regelung auf eine vorgegebene Raumtemperatur R welche jeweils in den verschiedenen Phasen erfolgt, entweder mittels Regelung des Heizkreislaufs 10 oder der Regelung der Wärmepumpe 20. Außerdem wurde auf die Darstellung einer Umschaltung von einem Heizbetrieb in einen Kühlbetrieb verzichtet.

**BEZUGSZEICHENLISTE**

| | | | |
|---|---|---|---|
| 1 | Klimatisierungsvorrichtung | | |
| 2 | Gebäudeteil | 30 | Kommunikationsverbindung |
| 3 | Peripherie | 31 | Funkverbindung |
| 4 | Raum | | |
| 5 | Gebäude | 40 | Temperatursensor (Peripherie) |
| 6 | zweiter Raum | 41 | Temperatursensor (Gebäudeteil) |
| | | | |
| 10 | Heizkreislauf | F | Wärmeträgermedium |
| 11 | Heizeinrichtung | G | Umschalttemperatur |
| 12 | erster Wärmetauscher | K | Kältemittel |
| 13 | Heizkörper | OFF | deaktive Wärmepumpe |
| 15 | Ventil | ON | aktive Wärmepumpe |
| 16 | Thermostat | R | Raumtemperatur |
| | | S | Soll-Wert |
| 20 | Wärmepumpe | S1 | Geschlossenstellung des Ventils |
| 21 | Regeleinheit | S2 | Freigegebenstellung des Ventils |
| 22 | Peripherie-Wärmetauscher | t | Zeit |
| 23 | Klima-Wärmetauscher | T | Peripherietemperatur |
| 24 | Kältemittelkreislauf | | |
| 25 | erste Leitung | | |
| 26 | Verdichter | | |
| 27 | zweite Leitung | | |
| 28 | Expansionsventil | | |

## Patentansprüche

1. Klimatisierungsvorrichtung (1) für einen Gebäudeteil (2), mit einem Heizkreislauf (10) für ein Wärmeträgermedium (F), umfassend eine Heizeinrichtung (11) und einen ersten Wärmetauscher (12), und mit einer Wärmepumpe (20), umfassend eine Regeleinheit (21), einen Peripherie-Wärmetauscher (22) und einen Klima-Wärmetauscher (23), wobei der erste Wärmetauscher (12) und der Klima-Wärmetauscher (23) mit dem Gebäudeteil (2) thermisch gekoppelt sind, und wobei der Peripherie-Wärmetauscher (22) mit einer Peripherie (3) des Gebäudeteils (2) thermisch gekoppelt ist,
**dadurch gekennzeichnet, dass** die Regeleinheit (21) der Wärmepumpe (20) über eine Kommunikationsverbindung (30) mit wenigstens einem regelbaren Ventil (15) im Heizkreislauf (10) verbunden ist.

2. Klimatisierungsvorrichtung (1) nach Anspruch 1,
**dadurch gekennzeichnet, dass** der erste Wärmetauscher (12) ein Heizkörper (13) oder eine Fußbodenheizung ist.

3. Klimatisierungsvorrichtung (1) nach einem der Ansprüche 1 oder 2,
**dadurch gekennzeichnet, dass** das regelbare Ventil (15) ein elektronisches Thermostat (16) ist.

4. Klimatisierungsvorrichtung (1) nach einem der vorhergehenden Ansprüche,
**dadurch gekennzeichnet, dass** das Ventil (15) dem ersten Wärmetauscher (12) zugeordnet ist.

5. Klimatisierungsvorrichtung (1) nach einem der vorhergehenden Ansprüche,
**dadurch gekennzeichnet, dass** das Ventil (15) am ersten Wärmetauscher (12) angeordnet ist.

6. Klimatisierungsvorrichtung (1) nach einem der vorhergehenden Ansprüche,
**dadurch gekennzeichnet, dass** die Kommunikationsverbindung (30) eine Funkverbindung (31) ist.

7. Klimatisierungsvorrichtung (1) nach einem der vorhergehenden Ansprüche,
**dadurch gekennzeichnet, dass** das regelbare Ventil (15) in dem Gebäudeteil (2) angeordnet ist.

8. Verfahren zur Steuerung einer Klimatisierungsvorrichtung (1) nach einem der Ansprüche 1 bis 7, wobei die Regeleinheit (21) der Wärmepumpe (20) folgende Schritte durchführt:
A) Bestimmen einer Peripherietemperatur (T) der Peripherie (3);
B) Vergleichen der Peripherietemperatur (T) mit einer Umschalttemperatur (G);
C) Aktivieren (ON) der Wärmepumpe (20) zur Beheizung des Gebäudeteils (2) und Schließen (S1) des regelbaren Ventils (15) im Heizkreislauf (10), wenn die Peripherietemperatur (T) größer ist als die Umschalttemperatur (G);
D) Deaktivieren (OFF) der Wärmepumpe (20) und Freigabe (S2) des regelbaren Ventils (15) im Heizkreislauf (10), wenn die Peripherietemperatur (T) geringer ist als die Umschalttemperatur (G).

9. Verfahren nach Anspruch 8,
**dadurch gekennzeichnet, dass** in der Regeleinheit (21) Effizienzwerte des Heizkreislaufs (10) und Effizienzwerte der Wärmepumpe (20) hinterlegt sind und die Regeleinheit (21) eine Berechnung der Umschalttemperatur (G) anhand des Effizienzwerts des Heizkreislaufs (10) und des Effizienzwerts der Wärmepumpe (20) durchführt.

10. Verfahren nach Anspruch 9,
**dadurch gekennzeichnet, dass** die Effizienzwerte CO2-Effizienzwerte sind und sich die Umschalttemperatur (G) aus dem Schnittpunkt der CO2-Emissionen der Wärmepumpe (20) sowie der CO2-Emissionen der Heizeinrichtung (11) über der Peripherietemperatur (T) ergibt.

11. Verfahren nach Anspruch 10,
**dadurch gekennzeichnet, dass** die Effizienzwerte Kosten-Effizienzwerte sind und sich die Umschalttemperatur (G) aus dem Schnittpunkt der Betriebskosten der Wärmepumpe (20) sowie der Betriebskosten der Heizeinrichtung (11) über der Peripherietemperatur (T) ergibt.

12. Verwendung einer Klimatisierungsvorrichtung (1) nach einem der Ansprüche 1 bis 7 zur Klimatisierung eines Gebäudeteils (2).

## Claims

1. Air-conditioning device (1) for a building part (2), with a heating circuit (10) for a heat transfer medium (F), comprising a heater (11) and a first heat exchanger (12), and with a heat pump (20), comprising a regulating unit (21), a peripheral heat exchanger (22) and an air-conditioning heat exchanger (23), the first heat exchanger (12) and the air-conditioning heat exchanger (23) being coupled thermally to the building part (2), and the peripheral heat exchanger (22) being thermally coupled to a periphery (3) of the building part (2),
**characterized in that** the regulating unit (21) of the heat pump (20) is connected to at least one regulatable valve (15) in the heating circuit (10) via a communication link (30).

2. Air-conditioning device (1) according to Claim 1, **characterized in that** the first heat exchanger (12) is a heating body (13) or floor heating.

3. Air-conditioning device (1) according to either of Claims 1 and 2,
**characterized in that** the regulatable valve (15) is an electronic thermostat (16).

4. Air-conditioning device (1) according to one of the preceding claims,
**characterized in that** the valve (15) is assigned to the first heat exchanger (12).

5. Air-conditioning device (1) according to one of the preceding claims,
**characterized in that** the valve (15) is arranged on the first heat exchanger (12).

6. Air-conditioning device (1) according to one of the preceding claims,
**characterized in that** the communication link (30) is a radio link (31).

7. Air-conditioning device (1) according to one of the preceding claims,
**characterized in that** the regulatable valve (15) is arranged in the building part (2).

8. Method for controlling an air-conditioning device (1) according to one of Claims 1 to 7, the regulating unit (21) of the heat pump (20) carrying out the following steps:
A) determination of a peripheral temperature (T) of the periphery (3);
B) comparison of the peripheral temperature (T) with a changeover temperature (G);
C) activation (ON) of the heat pump (20) for heating the building part (2) and closing (S1) of the regulatable valve (15) in the heating circuit (10) when the peripheral temperature (T) is higher than the changeover temperature (G);
D) deactivation (OFF) of the heat pump (20) and enabling (S2) of the regulatable valve (15) in the heating circuit (10) when the peripheral temperature (T) is lower than the changeover temperature (G).

9. Method according to Claim 8,
**characterized in that** efficiency values of the heating circuit (10) and efficiency values of the heat pump (20) are stored in the regulating unit (21), and the regulating unit (21) carries out a calculation of the changeover temperature (G) on the basis of the efficiency value of the heating circuit (10) and of the efficiency value of the heat pump (20).

10. Method according to Claim 9,
**characterized in that** the efficiency values are CO2 efficiency values and the changeover temperature (G) is obtained from the intersection point of the CO2 emissions of the heat pump (20) and of the CO2 emissions of the heater (11) against the peripheral temperature (T).

11. Method according to Claim 10,
**characterized in that** the efficiency values are cost efficiency values and the changeover temperature (G) is obtained from the intersection point of the operating costs of the heat pump (20) and of the operating costs of the heater (11) against the peripheral temperature (T).

12. Use of an air-conditioning device (1) according to one of Claims 1 to 7 for the air-conditioning of a building part (2).

## Revendications

1. Dispositif de climatisation (1) pour une partie de bâtiment (2), comprenant un circuit de chauffage (10) pour un milieu caloporteur (F), comprenant un dispositif de chauffage (11) et un premier échangeur de chaleur (12), et comprenant une pompe à chaleur (20), comprenant une unité de régulation (21), un échangeur de chaleur périphérique (22) et un échangeur de chaleur de climatisation (23), le premier échangeur de chaleur (12) et l'échangeur de chaleur de climatisation (23) étant accouplés thermiquement à la partie de bâtiment (2), et l'échangeur de chaleur périphérique (22) étant accouplé thermiquement à une périphérie (3) de la partie de bâtiment (2),
**caractérisé en ce que** l'unité de régulation (21) de la pompe à chaleur (20) est connectée par le biais d'une liaison de communication (30) à au moins une soupape réglable (15) dans le circuit de chauffage (10).

2. Dispositif de climatisation (1) selon la revendication 1,
**caractérisé en ce que** le premier échangeur de chaleur (12) est un corps chauffant (13) ou un chauffage au sol.

3. Dispositif de climatisation (1) selon l'une quelconque des revendications 1 à 2,
**caractérisé en ce que** la soupape réglable (15) est un thermostat électronique (16).

4. Dispositif de climatisation (1) selon l'une quelconque des revendications précédentes, **caractérisé en ce que** la soupape (15) est associée au premier échangeur de chaleur (12).

5. Dispositif de climatisation (1) selon l'une quelconque des revendications précédentes, **caractérisé en ce que** la soupape (15) est disposée sur le premier échangeur de chaleur (12).

6. Dispositif de climatisation (1) selon l'une quelconque des revendications précédentes, **caractérisé en ce que** la liaison de communication (30) est une liaison radio (31).

7. Dispositif de climatisation (1) selon l'une quelconque des revendications précédentes, **caractérisé en ce que** la soupape réglable (15) est disposée dans la partie de bâtiment (2).

8. Procédé de commande d'un dispositif de climatisation (1) selon l'une quelconque des revendications 1 à 7, dans lequel l'unité de régulation (21) de la pompe à chaleur (20) effectue les étapes suivantes :
A) détermination d'une température périphérique (T) de la périphérie (3) ;
B) comparaison de la température périphérique (T) avec une température de commutation (G) ;
C) activation (MARCHE) de la pompe à chaleur (20) pour le chauffage de la partie de bâtiment (2) et fermeture (S1) de la soupape réglable (15) dans le circuit de chauffage (10) si la température périphérique (T) est supérieure à la température de commutation (G) ;
D) désactivation (ARRÊT) de la pompe à chaleur (20) et ouverture (S2) de la soupape réglable (15) dans le circuit de chauffage (10) si la température périphérique (T) est inférieure à la température de commutation (G).

9. Procédé selon la revendication 8,
**caractérisé en ce que** dans l'unité de régulation (21) sont consignées des valeurs de rendement du circuit de chauffage (10) et des valeurs de rendement de la pompe à chaleur (20) et l'unité de régulation (21) effectue un calcul de la température de commutation (G) à l'aide de la valeur de rendement du circuit de chauffage (10) et de la valeur de rendement de la pompe à chaleur (20).

10. Procédé selon la revendication 9,
**caractérisé en ce que** les valeurs de rendement sont des valeurs de rendement sur le plan des émissions de CO2 et la température de commutation (G) s'obtient à partir du point d'intersection des émissions de CO2 de la pompe à chaleur (20) et des émissions de CO2 du dispositif de chauffage (11) en fonction de la température périphérique (T).

11. Procédé selon la revendication 10,
**caractérisé en ce que** les valeurs de rendement sont des valeurs de rendement en matière de coûts et la température de commutation (G) s'obtient à partir du point d'intersection des coûts d'exploitation de la pompe à chaleur (20) et des coûts d'exploitation du dispositif de chauffage (11) en fonction de la température périphérique (T).

12. Utilisation d'un dispositif de climatisation (1) selon l'une quelconque des revendications 1 à 7, pour la climatisation d'une partie de bâtiment (2).
